(19) Europäisches Patentamt
European Patent Office
Office européen des brevets

(11) **EP 2 757 681 B1**

(12) **FASCICULE DE BREVET EUROPEEN**

(45) Date de publication et mention
de la délivrance du brevet:
**23.03.2016 Bulletin 2016/12**

(51) Int Cl.:
*B60R 16/03* (2006.01)        *H02M 7/493* (2007.01)
*H02P 6/14* (2006.01)        *H02P 5/74* (2006.01)

(21) Numéro de dépôt: **14151498.4**

(22) Date de dépôt: **16.01.2014**

(54) **Baie modulaire d'onduleurs et son procédé de pilotage pour un ensemble de machines électriques munies de capteurs de position**

Modularer Einbauschacht für USV-Anlagen, und sein Verfahren zur Steuerung einer Gruppe von mit Positionssensoren ausgestatteten elektrischen Maschinen

Modular rack of inverters and method for controlling same for a set of electrical machines provided with position sensors

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.01.2013 FR 1300103**

(43) Date de publication de la demande:
**23.07.2014 Bulletin 2014/30**

(73) Titulaire: **Thales**
**92200 Neuilly Sur Seine (FR)**

(72) Inventeurs:
• **Dal, Arnaud**
**78400 Chatou (FR)**
• **Guguen, Stéphane**
**78400 Chatou (FR)**
• **Texeira, Tony**
**78400 Chatou (FR)**

(74) Mandataire: **Collet, Alain**
**Marks & Clerk France**
**Conseils en Propriété Industrielle**
**Immeuble Visium**
**22, Avenue Aristide Briand**
**94117 Arcueil Cedex (FR)**

(56) Documents cités:
**WO-A1-2012/031621        FR-A1- 2 899 040**
**FR-A1- 2 955 719        US-A- 3 757 179**

EP 2 757 681 B1

## Description

La présente invention concerne le domaine des systèmes électriques pour le pilotage de machines électriques équipant un aéronef. Plus particulièrement, elle porte sur une baie modulaire d'onduleurs et son procédé de pilotage destinés à un aéronef comprenant un ensemble de machines électriques munies de capteurs de position.

Un aéronef comprend généralement plusieurs machines électriques réparties dans l'aéronef pour remplir un ensemble de missions diverses. On connaît par exemple des machines électriques dédiées au démarrage d'une turbine de propulsion, à un groupe de climatisation de l'habitacle de l'aéronef, ou encore dédiées au fonctionnement des gouvernes aérodynamiques de l'aéronef. Pour ces missions, on a recours notamment à des machines électriques à courant continu, asynchrones, ou synchrones, triphasés, hexaphasés ou plus généralement polyphasés. Ces machines électriques consomment une puissance électrique disponible sur le réseau de bord de l'aéronef, et par exemple fournie par un générateur relié à une turbine ou encore fournit par un réseau aéroportuaire lorsque l'aéronef est au sol.

On sait qu'il est essentiel de disposer d'une information fiable de la position du rotor de la machine électrique. Toute erreur de mesure sur la position augmente les pertes électriques de manière significative. Typiquement, une erreur inférieure de 5% sur la position réelle est généralement recherchée, les impacts sur la machine étant considérés comme acceptables (pénalité en masse liée au surdimensionnent machine, coûts supplémentaires, notamment pour le refroidissement, etc...). Les machines électriques mises en oeuvre à bord d'un aéronef présentent des vitesses de rotation élevées, de l'ordre de 10.000 à 50.000 tr/min, nécessitant de disposer d'une information de position du rotor à haute fréquence, typiquement de l'ordre de 8 à 40 kHz. Plusieurs techniques existent pour l'évaluation de la position du rotor. On connaît une variété de capteurs assurant une mesure physique de la position, il existe également des moyens de calculs permettant d'évaluer cette position en fonction des tensions et courants mesurés en chacune des phases de la machine.

Dans une architecture électrique conventionnelle d'un aéronef, chaque machine électrique dispose d'un onduleur relié au réseau de bord qui met en forme le signal alimentant chacune des phases conformément aux besoins de la machine. Dans le cas d'une machine électrique équipée d'un capteur de position, l'onduleur s'appuie sur l'information de position du rotor fournie par le capteur de position, pour déterminer les consignes de courants et tensions statoriques et éventuellement rotoriques pour les machines à rotor bobiné.

Cette architecture dans laquelle un onduleur est affecté à une unique machine électrique présente des limites que l'invention cherche à résoudre. Par exemple, l'onduleur dédié à une machine électrique en charge du démarrage de la turbine n'est utilisé que lorsque l'aéronef est au sol avant le décollage. En vol, l'onduleur inutilisé représente une masse et un surcoût inutiles. De même, une défaillance d'un onduleur rend inutilisable une machine électrique pourtant opérationnelle. Pour ces raisons, il est désirable de disposer d'une architecture électrique plus modulaire, qui permettrait de modifier l'affectation d'un onduleur entre plusieurs machines. On envisage une baie modulaire de puissance pilotant l'alimentation d'un ensemble de machines électriques réparties dans l'aéronef au moyen d'un ensemble d'onduleurs. La réalisation d'une telle baie modulaire se heurte aux difficultés de la gestion des informations de position de l'ensemble de machines, et en particulier la centralisation des informations hautes fréquences de position et leur transmission sans dégradation (erreur, retard) vers les onduleurs concernés.

A cet effet, l'invention a pour objet une baie modulaire de puissance destinée à un aéronef comprenant un ensemble de machines électriques chacune équipée d'un capteur de position, et un réseau électrique de bord. La baie modulaire de puissance comprend :

- plusieurs onduleurs, alimentés en puissance électrique par le réseau électrique de bord,
- un organe de supervision comprenant des moyens pour :

  ○ collecter, pour chaque machine électrique, une consigne de pilotage machine, et une information de position délivrée par le capteur de position de la machine électrique,
  ○ déterminer, pour chaque onduleur, une consigne onduleur à partir des consignes de pilotage machine de l'ensemble de machines électriques,

- un premier canal de communication, entre l'organe de supervision et chacun des onduleurs, permettant de transmettre à chacun des onduleurs la consigne onduleur déterminée par l'organe de supervision,
- un second canal de communication, entre l'organe de supervision et chacun des onduleurs, permettant de transmettre à chacun des onduleurs une information de position,
- un dispositif de distribution, qui fournit à chaque machine électrique un signal électrique d'alimentation assemblé à partir de signaux électriques de puissance générés par les onduleurs,

chacun des onduleurs comprenant des moyens pour générer un signal électrique de puissance en fonction de la consigne onduleur et de l'information de position transmises par l'organe de supervision respectivement par le premier et le second canal de communication.

L'invention porte également sur un procédé de pilotage destiné à un aéronef comprenant un ensemble de machines électriques chacune équipée d'un capteur de position, et plusieurs onduleurs alimentés en puissance électrique par un réseau de bord de l'aéronef. Le procédé comporte des étapes consistant à :

- collecter, pour chaque machine électrique, une consigne de pilotage machine et une information de position délivrée par le capteur de position de la machine électrique,
- déterminer, pour chaque onduleur, une consigne onduleur à partir des consignes de pilotage machine de l'ensemble de machines électriques,
- générer, par chaque onduleur, un signal électrique de puissance en fonction de la consigne onduleur et de l'information de position,
- fournir à chaque machine électrique un signal électrique d'alimentation assemblé à partir de signaux électriques de puissance générés par un ou plusieurs onduleurs.

L'invention sera mieux comprise et d'autres avantages apparaîtront à la lecture de la description détaillée des modes de réalisation donnés à titre d'exemple sur les figures suivantes.

La figure 1 représente les principaux constituants d'une baie modulaire de puissance selon un premier mode de réalisation de l'invention,
la figure 2 représente les principaux constituants d'une baie modulaire de puissance selon un second mode de réalisation de l'invention,
la figure 3 illustre le principe de fonctionnement d'une baie modulaire de puissance selon l'invention.

Par souci de clarté, les mêmes éléments porteront les mêmes repères dans les différentes figures.

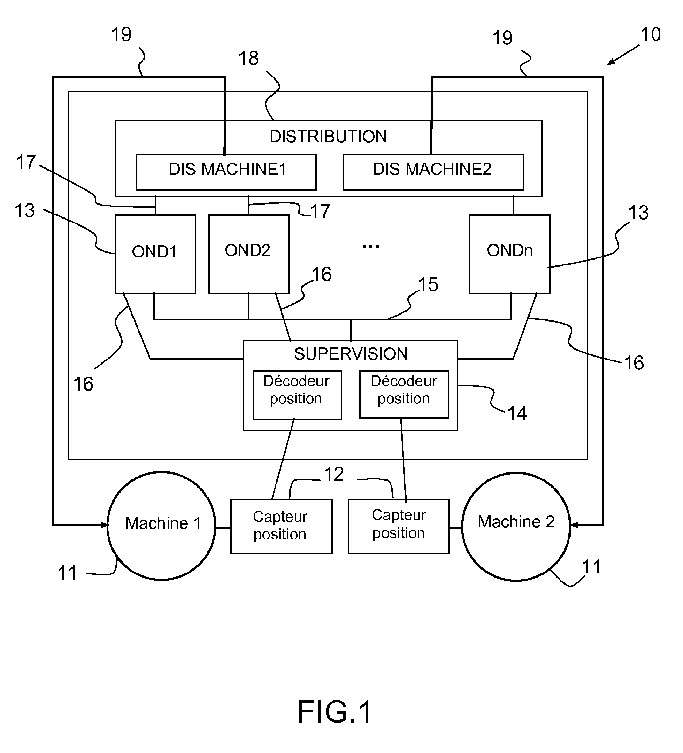

La figure 1 représente les principaux constituants d'une baie modulaire de puissance selon un premier mode de réalisation de l'invention. Une baie modulaire de puissance 10 est destinée à un aéronef comprenant un ensemble de machines électriques 11. Chaque machine électrique 11 est équipée d'un capteur de position 12.
La baie modulaire de puissance comprend plusieurs onduleurs 13, alimentés en puissance électrique par un réseau électrique de bord de l'aéronef (non représenté sur la figure).
La baie modulaire comprend également un organe de supervision 14. Cet organe de supervision comprend des moyens pour collecter, pour chaque machine électrique 11, une consigne de pilotage machine *CONS_MAC.* Ces consignes de pilotage machine peuvent être émises directement par la machine ou par divers dispositifs ou calculateurs réparties sur l'aéronef qui utilisent ou pilotent la machine. Typiquement, un calculateur en charge de la gestion de la thermique habitacle transmet une consigne de pilotage vers l'organe de supervision de la baie modulaire de puissance, pour une machine électrique reliée à un groupe de climatisation.

Une consigne de pilotage machine est donc constituée d'un ensemble de valeurs nécessaires au pilotage de la machine. Parmi ces valeurs, on pense notamment à une consigne de vitesse de rotation du rotor de la machine, associée généralement à une limitation de puissance électrique, ou encore à une demande de démarrage. L'organe de supervision 14 comprend également des moyens pour collecter, pour chaque machine électrique 11, une information de position référencée $\theta_0$, délivrée par le capteur de position 12 de chaque machine électrique 11. Comme nous l'avons mentionné, divers types de capteurs de position opérant une mesure physique de la position du rotor sont possibles. Chaque machine électrique peut être équipée d'un capteur spécifique. La baie modulaire est reliée par une liaison physique permettant la transmission de l'information de position $\theta_0$ de chaque machine électrique vers l'organe de supervision.
L'organe de supervision 14 comprend en outre des moyens pour déterminer, pour chaque onduleur 13, une consigne onduleur *CONS_OND* à partir des consignes de pilotage machine *CONS_MAC* de l'ensemble des machines électriques 11. Ainsi, l'organe de supervision assure la répartition et l'affectation de chacun des onduleurs 13 pour répondre de manière optimisée au besoin exprimé par les consignes de pilotage machine de l'ensemble des machines électriques. Il peut par exemple affecter plusieurs onduleurs à l'alimentation électrique d'une machine électrique, en déterminant pour chacun de ces onduleurs une consigne onduleur, permettant après assemblage des signaux électriques de ces onduleurs d'alimenter une machine conformément à sa consigne de pilotage machine. Ainsi, un onduleur dédié au démarrage d'une turbine avant décollage pourra pendant le vol être sollicité pour l'alimentation d'une machine pour couvrir un autre besoin.
Notons par ailleurs que ces moyens, permettant à l'organe de supervision de collecter des consignes de pilotage machine et des informations de position, et déterminer des consignes onduleur, mettent en oeuvre divers algorithmes de calcul, notamment ceux décrits par la suite pour le procédé de pilotage de la baie modulaire. En pratique, ces algorithmes de calcul sont hébergés dans un calculateur électronique constituant l'organe de supervision.
La baie modulaire de puissance 10 comprend un premier canal de communication 15 entre l'organe de supervision 14 et chacun des onduleurs 11, permettant de transmettre à chacun des onduleurs 11 la consigne onduleur *CONS_OND* déterminée par l'organe de supervision 14. Préférentiellement, ce canal de communication 15 est une liaison bus, contenant de manière multiplexée, l'ensemble des consignes onduleurs *CONS_OND.* Le bus de communication 15 et les onduleurs 11 sont configurés de manière à ce que chaque onduleur prélève la consigne onduleur *CONS_OND* qui le concerne.
La baie modulaire de puissance 10 comprend également un second canal de communication 16 entre l'organe de supervision 14 et chacun des onduleurs 11, permettant de transmettre à chacun des onduleurs 11 une information de position $\theta_0$. Dans ce premier mode de réalisation, le second canal de communication 16 est constitué d'un ensemble de liaison. Une liaison, préférentiellement une liaison bus, relie chaque onduleur 11 à l'organe de supervision 14 comme représenté sur la figure 1.

A partir de la consigne onduleur *CONS_OND* et de l'information de position $\theta_0$, reçus de l'organe de supervision 14, respectivement par le premier et le second canal de communication, chaque onduleur génère un signal électrique de puissance 17.

La baie modulaire de puissance 10 comprend un dispositif de distribution 18, qui fournit à chaque machine électrique 11 un signal électrique d'alimentation 19 assemblé à partir des signaux électriques de puissance 17 générés par les onduleurs 11.

Ce premier mode de réalisation permet avantageusement de découpler la transmission vers les onduleurs des consignes onduleurs *CONS_OND* et la transmission de chacune des informations de position $\theta_0$. Comme nous l'avons indiqué, le pilotage optimisé d'une machine électrique, c'est-à-dire en limitant les pertes électriques, nécessite de disposer d'une information de position précise, et implique de transmettre sans erreur, ni retard et avec une fréquence élevée cette information du capteur de position 12 vers l'onduleur concerné. En revanche, l'exigence sur la transmission de la consigne onduleur est généralement moins forte. Le découplage des deux canaux de transmission permet avantageusement de dimensionner la baie modulaire au plus juste de ces deux besoins.

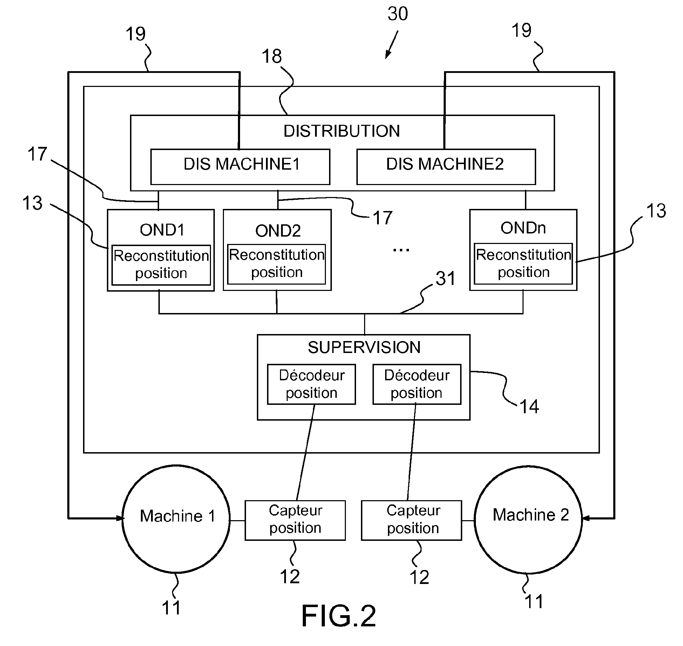

La figure 2 représente les principaux constituants d'une baie modulaire de puissance selon un second mode de réalisation de l'invention. Ce mode de réalisation reprend une partie des constituants décrits dans le cas de la figure 1. Ainsi, la baie modulaire de puissance 30, est destinée à un aéronef comprenant un ensemble de machines électriques 11 ; chaque machine électrique 11 étant équipée d'un capteur de position 12.

La baie modulaire de puissance 30 comprend également plusieurs onduleurs 13, et l'organe de supervision 14. Comme précédemment décrit, l'organe de supervision 14 comprend des moyens pour :

- collecter, pour chaque machine électrique 11, une consigne de pilotage machine *CONS_MAC,* et une information de position $\theta_0$ délivrée par le capteur de position 12 de la machine électrique,
- déterminer, pour chaque onduleur 13, une consigne onduleur *CONS_OND* à partir des consignes de pilotage machine *CONS_MAC* de l'ensemble de machines électriques.

La baie modulaire de puissance 30 comprend aussi un dispositif de distribution 18, qui fournit à chaque machine électrique 11 un signal électrique d'alimentation

19 assemblé à partir des signaux électriques de puissance 17 générés par les onduleurs 11 ; chacun des onduleurs 13 comprenant des moyens pour générer le signal électrique de puissance 17 en fonction de la consigne onduleur *CONS_OND* et de l'information de position $\theta_0$ transmises par l'organe de supervision.

Dans ce second mode de réalisation, les informations de position $\theta_0$ et les consignes onduleurs *CONS_OND* sont transmises au moyen d'une liaison unique 31. Autrement dit, le premier et le second canal de communication sont constitués d'une liaison unique 31 reliant l'organe de supervision et les onduleurs, et transmettant à la fois les consignes onduleurs et les informations de position. Préférentiellement, la liaison est une liaison bus, contenant de manière multiplexée, l'ensemble des consignes onduleurs *CONS_OND* et des informations de position $\theta_0$. Le bus de communication 31 et les onduleurs 11 sont configurés de manière à ce que chaque onduleur prélève la consigne onduleur *CONS_OND* et l'information de position $\theta_0$ qui le concerne.

Ce second mode de réalisation permet avantageusement de simplifier l'architecture électrique de la baie modulaire de puissance. On simplifie de manière significative le cablage entre l'organe de supervision et les onduleurs. L'interface de connection électrique de l'organe de supervision est aussi considérablement simplifiée.

Comme nous l'avons précisé, il convient de disposer, au niveau de l'onduleur, d'une information précise, sans erreur ni retard, pour limiter les pertes électriques. Une première solution, applicable aux deux modes de réalisation précédemment décrits, consiste à dimensionner les canaux de communication transmettant l'information de position, respectivement référencés 16 et 31 sur les figures 1 et 2, de manière à transmettre une information de position à haute fréquence. Une seconde solution proposée par la présente invention et applicable aux deux modes de réalisation précédemment décrits, consiste à transmettre une information de position à plus basse fréquence et à pourvoir chaque onduleur de moyens d'estimation de position à plus haute fréquence, compatible des exigences de pilotage des machines électriques.

Pour cela, la baie modulaire de puissance comprend avantageusement des moyens de synchronisation qui associe une datation $t_0$ à chaque information de position délivrée par les capteurs de position 12 de chacune des machines électriques 11. La datation $t_0$ associée à une information de position $\theta_0$ étant également transmise par le second canal de communication. Dans cette seconde solution, les onduleurs comprennent des moyens de calcul, pour déterminer une position estimée $\theta_{est}$ à partir de l'information de position $\theta_0$ transmise à l'onduleur 11 par l'organe de supervision 14. Ces moyens de calcul ont pour but de déterminer une position estimée $\theta_{est}$ à une fréquence plus élevée que la fréquence de transfert de l'information de position $\theta_0$ propre au second

canal de communication, 16 ou 31.

Lorsque le débit du bus est trop faible pour assurer le rafraîchissement de l'information position à une fréquence suffisante pour l'onduleur, l'onduleur reconstitue une information position haute fréquence à l'aide d'un estimateur, préférentiellement du type :

$$\theta_{est} = \theta_0 + \omega_0 \times \Delta t + \gamma_0 \times \Delta t^2 + \ldots$$

dans laquelle $\theta_{est}$, $\theta_0$, $\omega_0$, $\gamma_0$ et $\Delta t$ représentent respectivement la position estimée, l'information de position transmise à l'onduleur, une vitesse de rotation du rotor estimée par l'onduleur, une accélération de rotation du rotor estimée par l'onduleur, et une estimation de temps écoulé depuis la datation $t_0$.

Les inerties des machines étant relativement importantes, la position estimée est généralement calculée au moyen d'un estimateur d'ordre un, c'est-à-dire mettant en oeuvre la relation suivante :

$$\theta_{est} = \theta_0 + \omega_0 \times \Delta t$$

ou alternativement d'un estimateur d'ordre deux, c'est-à-dire mettant en oeuvre la relation suivante :

$$\theta_{est} = \theta_0 + \omega_0 \times \Delta t + \gamma_0 \times \Delta t^2$$

Notons que la vitesse de rotation, et/ou l'accélération de rotation sont préférentiellement calculées au moyen de deux informations de position $\theta_0$ successives ; ce calcul pouvant être réalisé par l'onduleur, ou alternativement par l'organe de supervision et transmis sur le bus.

Notons également que plusieurs moyens de synchronisation sont envisagés par la présente invention. Dans une première variante les moyens de synchronisation mettent en oeuvre un signal physique supplémentaire. Dans une seconde variante, les moyens de synchronisation utilisent des bits de synchronisation dans les trames du bus de communcation.

Cette solution consistant à recalculer au niveau de l'onduleur, une information de position adaptée au besoin de la machine électrique, est particulièrement avantageuse car elle permet de limiter l'exigence en fréquence pour le second canal de communication transmettant l'information de position à l'onduleur. Dans le cas du second mode de réalisation décrit sur la figure 2, il devient possible de mettre en oeuvre un bus de communication unique, présentant un débit de bus raisonnable, tout en limitant les pertes électriques, par un recalcul au niveau de chaque onduleur d'une position adapté au fonctionnement de la machine électrique pilotée. La synchronisation des informations de position capteur assure de disposer d'une information précise de la position estimée, permettant de limiter les pertes électriques.

Notons que pour les deux modes de réalisation représentés sur les figures 1 et 2, l'ensemble des bus de communication pourra être redondé pour des raisons de sécurité en vol. On pense en particulier aux canaux de communication 15, 16 et 31.

Notons également que la baie modulaire décrite sur les figures 1 et 2 est destinée à un aéronef comprenant un ensemble de machines électriques équipées d'un capteur de position. La baie modulaire de puissance représentée et décrite prévoit que chaque machine électrique soit équipée d'un capteur de position. Il est bien entendu que l'invention s'applique de la même façon à un aéronef comprenant un ensemble de machines électriques dont un premier sous-ensemble est équipé de capteur de position, et un second sous-ensemble est dépourvu de capteur de position. Dans une telle configuration, l'invention s'applique au premier sous-ensemble de machines électriques chacune équipées d'un capteur de position. Bien entendu, il est envisagé que l'ensemble des constituants physiques de la baie modulaire de puissance selon l'invention permettant le pilotage du premier sous-ensemble peut être intégré dans un dispositif regroupant d'autres constituants physiques permettant le pilotage du second sous-ensemble.

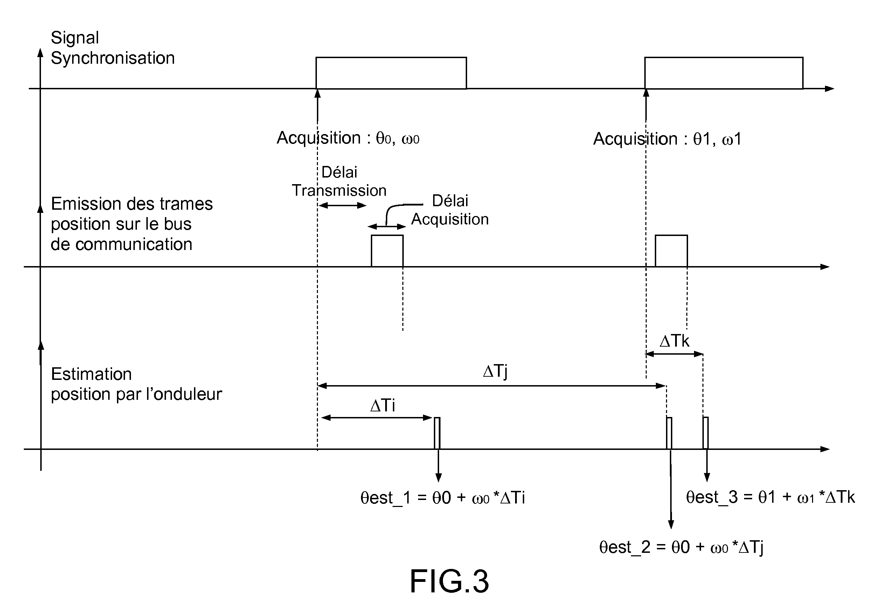

La figure 3 illustre le principe de fonctionnement d'une baie modulaire dont un onduleur comprend des moyens de calcul d'une position estimée. Le premier chronogramme en partie supérieure représente le signal de synchronisation utilisé par les moyens de calcul de l'onduleur. Le second chronogramme en partie intermédiaire représente l'information de position $\theta_0$ reçue par l'onduleur via le second canal de communication. Le troisième chronogramme en partie inférieure représente la position estimée $\theta_{est}$ par les moyens de calcul de l'onduleur.

Le calcul d'une position estimée $\theta_{est}$ par l'onduleur est soumis au cadencement de l'horloge de synchronisation. A chaque front montant de l'horloge, une information de position $\theta_0$ est transmise par l'organe de supervision. Cette information de position devient disponible au niveau de l'onduleur après un certain délai, comprenant un délai de transmission par le canal de communication et un délai d'acquisition par l'onduleur. A cette information de position $\theta_0$ est associée la datation $t_0$.

Comme représenté sur le troisième chronogramme, si le pilotage de la machine électrique exige une information de position à un temps $t_0 + \Delta Ti$, l'onduleur qui dispose des moyens de calcul précédemment décrits, détermine une position estimée $\theta_{est\_1}$ en fonction de $\theta_0$ et $\Delta Ti$. De même, le calcul de la position $\theta_{est\_2}$ illustre le cas où le pilotage de la machine électrique exige une information de position et que l'information de position n'est pas encore disponible au niveau de l'onduleur. Dans ce cas, l'onduleur détermine $\theta_{est\_2}$, au moyen de l'information $\theta_0$ du pas de temps précédent et au moyen du délai $\Delta Tj$. Dès lors que l'information de position $\theta_1$ du pas de temps suivant est disponible, le calcul de la position estimée l'utilise. C'est le cas illustré par le calcul de $\theta_{est\_3}$, au moyen de l'information $\theta_1$ et du délai $\Delta Tk$.

L'invention porte également sur un procédé de pilotage destiné à un aéronef comprenant un ensemble de machines électriques 11 chacune équipée d'un capteur de position 12, et plusieurs onduleurs 13 alimentés en puissance électrique par un réseau de bord de l'aéronef, caractérisé en ce qu'il comporte des étapes consistant à :

- collecter, pour chaque machine électrique 11, une consigne de pilotage machine et une information de position délivrée par le capteur de position de la machine électrique 11,
- déterminer, pour chaque onduleur 13, une consigne onduleur à partir des consignes de pilotage machine de l'ensemble de machines électriques 11,
- générer, par chaque onduleur 13, un signal électrique de puissance en fonction de la consigne onduleur et de l'information de position,
- fournir à chaque machine électrique 11 un signal électrique d'alimentation assemblé à partir de signaux électriques de puissance générés par un ou plusieurs onduleurs 13.

Dans une mise en oeuvre particulièrement avantageuse, le procédé comporte l'étape supplémentaire consistant à déterminer, à partir de l'information de position $\theta_0$ transmise à l'onduleur selon une fréquence de transfert, d'une position estimée $\theta_{est}$ à une fréquence plus élevée que la fréquence de transfert; la position estimée $\theta_{est}$ remplaçant l'information de position $\theta_0$ pour générer le signal électrique de puissance.

## Revendications

**1.** Baie modulaire de puissance destinée à un aéronef comprenant un ensemble de machines électriques (11) chacune équipée d'un capteur de position (12), et un réseau électrique de bord,
**caractérisé en ce que** la baie modulaire de puissance comprend :

- plusieurs onduleurs (13), alimentés en puissance électrique par le réseau électrique de bord,
- un organe de supervision (14) comprenant des moyens pour :

o collecter, pour chaque machine électrique (11), une consigne de pilotage machine (*CONS_MAC*), et une information de position ($\theta_0$) délivrée par le capteur de position (12) de la machine électrique (11),
o déterminer, pour chaque onduleur (13), une consigne onduleur *(CONS_OND)* à partir des consignes de pilotage machine

*(CONS_MAC)* de l'ensemble de machines électriques (11),

- un premier canal de communication (15 ; 31), entre l'organe de supervision (14) et chacun des onduleurs (13), permettant de transmettre à chacun des onduleurs (13) la consigne onduleur *(CONS_OND)* déterminée par l'organe de supervision (14),
- un second canal de communication (16; 31), entre l'organe de supervision (14) et chacun des onduleurs (13), permettant de transmettre à chacun des onduleurs (13) une information de position ($\theta_0$),
- un dispositif de distribution (18), qui fournit à chaque machine électrique (11) un signal électrique d'alimentation (19) assemblé à partir de signaux électriques de puissance (17) générés par les onduleurs (13),

chacun des onduleurs (13) comprenant des moyens pour générer un signal électrique de puissance (17) en fonction de la consigne onduleur (*CONS_OND*) et de l'information de position ($\theta_0$) transmises par l'organe de supervision (14) respectivement par le premier et le second canal de communication (15, 16 ; 31).

**2.** Baie modulaire de puissance selon la revendication 1, dont le premier canal de communication (15) est constitué d'une liaison bus.

**3.** Baie modulaire de puissance selon l'une des revendications 1 ou 2, dont le second canal de communication (16) est constitué d'un ensemble de liaisons bus ; une liaison bus reliant chaque onduleur à l'organe de supervision.

**4.** Baie modulaire de puissance selon l'une des revendications 1 ou 2, dont le premier et le second canal de communication (31) sont constitués d'une liaison bus unique reliant l'organe de supervision et les onduleurs, et transmettant à la fois les consignes onduleurs (*CONS_OND*) et les informations de position ($\theta_0$).

**5.** Baie modulaire de puissance selon l'une des revendications précédentes, comprenant des moyens de synchronisation qui associe une datation ($t_0$) à chaque information de position ($\theta_0$) délivrée par les capteurs de position (12) de chacune des machines électriques (11); la datation ($t_0$) associée à une information de position ($\theta_0$) étant également transmise par le second canal de communication (16 ; 31).

**6.** Baie modulaire de puissance selon la revendication 5, dont au moins un onduleur (14) comprend des moyens de calcul, à partir de l'information de position

($\theta_0$) transmise à l'onduleur (14) selon une fréquence de transfert, d'une position estimée ($\theta_{est}$) à une fréquence plus élevée que la fréquence de transfert; la position estimée ($\theta_{est}$) remplaçant l'information de position ($\theta_0$) pour générer le signal électrique de puissance (17).

**7.** Baie modulaire de puissance selon la revendication 6, dont la position estimée ($\theta_{est}$) est calculée au moyen d'un estimateur d'ordre un mettant en oeuvre une relation du type :

$$\theta_{est} = \theta_0 + \omega_0 \times \Delta t$$

dans laquelle $\theta_{est}$, $\theta_0$, $\omega_0$ et $\Delta t$ représentent respectivement la position estimée, l'information de position transmise à l'onduleur, une vitesse de rotation du rotor estimée par l'onduleur, et une estimation de temps écoulé depuis la datation.

**8.** Baie modulaire de puissance selon la revendication 6, dont la position estimée ($\theta_{est}$) est calculée au moyen d'un estimateur d'ordre deux mettant en oeuvre une relation du type :

$$\theta_{est} = \theta_0 + \omega_0 \times \Delta t + \gamma_0 \times \Delta t^2$$

dans laquelle $\theta_{est}$, $\theta_0$, $\omega_0$, $\gamma_0$ et $\Delta t$ représentent respectivement la position estimée, l'information de position transmise à l'onduleur, une vitesse de rotation du rotor estimée par l'onduleur, une accélération de rotation du rotor estimée par l'onduleur, et une estimation de temps écoulé depuis la datation.

**9.** Baie modulaire de puissance selon l'une des revendications 5 à 8, dont la datation ($t_0$) associée à une information de position ($\theta_0$) est déterminée au moyen d'un signal physique supplémentaire.

**10.** Baie modulaire de puissance selon l'une des revendications 5 à 8 et l'une des revendications 3 ou 4, dont la datation ($t_0$) associée à une information de position ($\theta_0$) est un bit de synchronisation dans une trame de communication de la liaison bus (16; 31) transmettant l'information de position.

**11.** Procédé de pilotage destiné à un aéronef comprenant un ensemble de machines électriques (11) chacune équipée d'un capteur de position (12), et plusieurs onduleurs (13) alimentés en puissance électrique par un réseau de bord de l'aéronef, un organe de supervision (14), un premier canal de communication (15 ; 31) entre l'organe de supervision (14) et chacun des onduleurs (13), un second canal de communication (16 ; 31) entre l'organe de supervision

(14) et chacun des onduleurs (13), un dispositif de distribution (18), **caractérisé en ce qu'**il comporte des étapes consistant à :

- collecter, pour chaque machine électrique (11), au moyen de l'organe de supervision (14) une consigne de pilotage machine *(CONS_MAC)* et une information de position ($\theta_0$) délivrée par le capteur de position (12) de la machine électrique (11),
- déterminer, pour chaque onduleur (13), au moyen de l'organe de supervision (14) une consigne onduleur (*CONS_OND*) à partir des consignes de pilotage machine (*CONS_MAC*) de l'ensemble de machines électriques (11),
- générer, par chaque onduleur (13), un signal électrique de puissance (17) en fonction de la consigne onduleur (*CONS_OND*) et de l'information de position ($\theta_0$), transmises par l'organe de supervision (14) respectivement par le premier et le second canal de communication (15, 16 ; 31),
- fournir à chaque machine électrique (11), au moyen du dispositif de distribution (18), un signal électrique d'alimentation (19) assemblé à partir de signaux électriques de puissance (17) générés par un ou plusieurs onduleurs (13).

**12.** Procédé de pilotage selon la revendcation 11, comportant l'étape supplémentaire consistant à déterminer, à partir de l'information de position ($\theta_0$) transmise à un onduleur (13) selon une fréquence de transfert, d'une position estimée ($\theta_{est}$) à une fréquence plus élevée que la fréquence de transfert; la position estimée ($\theta_{est}$) remplaçant l'information de position ($\theta_0$) pour générer le signal électrique de puissance (17).

**Patentansprüche**

**1.** Modularer Schaltschrank für ein Flugzeug, umfassend einen Satz von jeweils mit einem Positionssensor (12) ausgestatteten Elektromaschinen (11) und einem elektrischen Bordnetz, **dadurch gekennzeichnet, dass** der modulare Schaltschrank Folgendes umfasst:

- mehrere Wechsehichter (13), die von dem elektrischen Bordnetz mit elektrischer Leistung versorgt werden,
- eine Überwachungsstelle (14), die Mittel umfasst zum:

∘ Sammeln, für jede Elektromaschine (11), eines Maschinensteuersollwerts (*CONS_MAC*) und einer Positionsinformation ($\theta_0$), geliefert von dem Positionssensor (12) der Elektromaschine (11),

∘ Ermitteln, für jeden Wechselrichter (13), eines Wechselrichtersollwerts (*CONS_OND*) auf der Basis der Maschinensteuersollwerte (*CONS_MAC*) des Satzes von Elektromaschinen (11),

- einen ersten Kommunikationskanal (15; 31) zwischen der Überwachungsstelle (14) und jedem der Wechselrichter (13), über den der von der Überwachungsstelle (14) ermittelte Wechsehichtersollwert (*CONS_OND*) zu jedem der Wechselrichter (13) übertragen werden kann,
- einen zweiten Kommunikationskanal (16; 31) zwischen der Überwachungsstelle (14) und jedem der Wechselrichter (13), über den eine Positionsinformation ($\theta_0$) zu jedem der Wechsehichter (13) übertragen werden kann,
- eine Verteilungsvorrichtung (18), die zu jeder Elektromaschine (11) ein Stromversorgungssignal (19) liefert, zusammengesetzt aus von den Wechsehichtern (13) erzeugten Stromsignalen (17),

wobei jeder der Wechsehichter (13) Mittel zum Erzeugen eines elektrischen Leistungssignals (17) in Abhängigkeit von dem Wechsehichtersollwert (*CONS_OND*) und von der Positionsinformation ($\theta_0$) umfasst, jeweils übertragen von der Überwachungsstelle (14) über den ersten und den zweiten Kommunikationskanal (15, 16; 31).

2. Modularer Schaltschrank nach Anspruch 1, dessen erster Kommunikationskanal (15) von einer Busverbindung gebildet wird.

3. Modularer Schaltschrank nach Anspruch 1 oder 2, dessen zweiter Kommunikationskanal (16) von einem Satz von Busverbindungen gebildet wird; wobei eine Busverbindung jeden Wechselrichter mit der Überwachungsstelle verbindet.

4. Modularer Schaltschrank nach Anspruch 1 oder 2, dessen erster und zweiter Kommunikationskanal (31) von einer einzigen Busverbindung gebildet werden, die die Überwachungsstelle und die Wechsehichter verbindet und gleichzeitig die Wechselrichtersollwerte (*CONS_OND*) und die Positionsinformationen ($\theta_0$) überträgt.

5. Modularer Schaltschrank nach einem der vorherigen Ansprüche, der Synchronisationsmittel umfasst, die mit jeder von den Positionssensoren (12) von jeder der Elektromaschinen (11) gelieferten Positionsinformation ($\theta_0$) eine Datierung ($t_0$) assoziieren; wobei die mit einer Positionsinformation ($\theta_0$) assoziierte Datierung ($t_0$) auch über den zweiten Kommunikationskanal (16; 31) übertragen wird.

6. Modularer Schaltschrank nach Anspruch 5, von dem wenigstens ein Wechselrichter (14) Mittel zum Berechnen, auf der Basis der zu dem Wechsehichter (14) übertragenen Positionsinformation ($\theta_0$) gemäß einer Übertragungsfrequenz, einer geschätzten Position ($\theta_{est}$) auf einer höheren Frequenz als der Übertragungsfrequenz umfasst; wobei die geschätzte Information ($\theta_{est}$) die Positionsinformation ($\theta_0$) zum Erzeugen des elektrischen Leistungssignals (17) ersetzt.

7. Modularer Schaltschrank nach Anspruch 6, dessen geschätzte Position ($\theta_{est}$) mittels eines Schätzers erster Ordnung unter Anwendung einer Relation des folgenden Typs berechnet wird:

$$\theta_{est} = \theta_0 + \omega_0 \text{ x } \Delta t$$

wobei $\theta_{est}$, $\theta_0$, $\omega_0$ und $\Delta t$ jeweils die geschätzte Position, die zum Wechselrichter übertragene Positionsinformation, eine von dem Wechsehichter geschätzte Rotationsgeschwindigkeit des Rotors und eine Schätzung der seit der Datierung verstrichenen Zeit repräsentiert.

8. Modularer Schaltschrank nach Anspruch 6, dessen geschätzte Information ($\theta_{est}$) mittels eines Schätzers zweiter Ordnung unter Anwendung einer Relation des folgenden Typs berechnet wird:

$$\theta_{est} = \theta_0 + \omega_0 \text{ x } \Delta t + \gamma_0 \text{ x } \Delta t^2$$

wobei $\theta_{est}$, $\theta_0$, $\omega_0$, $\gamma_0$ und $\Delta t$ jeweils die geschätzte Position, die zum Wechselrichter übertragene Positionsinformation, eine vom Wechselrichter geschätzte Drehgeschwindigkeit des Rotors, eine vom Wechsehichter geschätzte Drehbeschleunigung des Rotors und eine Schätzung der seit der Datierung verstrichenen Zeit repräsentieren.

9. Modularer Schaltschrank nach einem der Ansprüche 5 bis 8, dessen mit einer Positionsinformation ($\theta_0$) assoziierte Datierung ($t_0$) mittels eines ergänzenden physikalischen Signals ermittelt wird.

10. Modularer Schaltschrank nach einem der Ansprüche 5 bis 8 und einem der Ansprüche 3 bis 4, dessen mit einer Positionsinformation ($\theta_0$) assoziierte Datierung ($t_0$) ein Synchronisationsbit in einem Kommunikationsrahmen der Busverbindung (16; 31) ist, die die Positionsinformation überträgt.

11. Steuerverfahren für ein Flugzeug, das Folgendes umfasst: einen Satz von jeweils mit einem Positionssensor (12) ausgestatteten Elektromaschinen (11) und mehrere Wechselrichter (13), die von einem Bordnetz des Flugzeugs mit elektrischer Leistung versorgt werden, eine Überwachungsstelle (14), einen ersten Kommunikationskanal (15; 31) zwischen der Überwachungsstelle (14) und jedem der Wechsehichter (13), einen zweiten Kommunikationskanal (16; 31) zwischen der Überwachungsstelle (14) und jedem der Wechsehichter (13), eine Verteilungsvorrichtung (18), **dadurch gekennzeichnet, dass** es die folgenden Schritte beinhaltet:

- Sammeln für jede Elektromaschine (11), mittels der Überwachungsstelle (14), eines Maschinensteuersollwerts (*CONS_MAC*) und einer Positionsinformation ($\theta_0$), geliefert vom Positionssensor (12) der Elektromaschine (11),
- Ermitteln für jeden Wechselrichter (13), mittels der Überwachungsstelle (14), eines Wechselrichtersollwerts (*CONS_OND*) von Maschinensteuersollwerten (*CONS_MAC*) des Satzes von Elektromaschinen (11),
- Erzeugen, für jeden Wechselrichter (13), eines elektrischen Leistungssignals (17) in Abhängigkeit von dem Wechsehichtersollwert (*CONS_OND*) und der Positionsinformation ($\theta_0$), übertragen von der Überwachungsstelle (14) jeweils über den ersten und den zweiten Kommunikationskanal (15, 16; 31),
- Liefern, zu jeder Elektromaschine (11) mittels der Verteilungsvorrichtung (18), eines elektrischen Versorgungssignals (19), zusammengesetzt aus von einem oder mehreren Wechselrichtern (13) erzeugten elektrischen Leistungssignalen (17).

**12.** Steuerverfahren nach Anspruch 11, das den ergänzenden Schritt des Ermitteins, auf der Basis der zu einem Wechselrichter (13) übertragenen Positionsinformation ($\theta_0$) gemäß einer Übertragungsfrequenz, einer geschätzten Position ($\theta_{est}$) auf einer höheren Frequenz als der Übertragungsfrequenz beinhaltet; wobei die geschätzte Position ($\theta_{est}$) die Positionsinformation ($\theta_0$) zum Erzeugen des elektrischen Leistungssignals (17) ersetzt.

**Claims**

**1.** Modular power rack intended for an aircraft comprising a set of electrical machines (11) each equipped with a position sensor (12), and an onboard electrical network,
**characterized in that** the modular power rack comprises:

- a number of inverters (13), supplied with electrical power by the onboard electrical network,
- a supervision member (14) comprising means for:

○ collecting, for each electrical machine (11), a machine control setpoint (*CONS_MAC*), and position information ($\theta_0$) delivered by the position sensor (12) of the electrical machine (11),
○ determining, for each inverter (13), an inverter setpoint (*CONS_OND*) from the machine control setpoints (*CONS_MAC*) of the set of electrical machines (11),

- a first communication channel (15; 31), between the supervision member (14) and each of the inverters (13), making it possible to transmit to each of the inverters (13) the inverter setpoint (*CONS_OND*) determined by the supervision member (14),
- a second communication channel (16; 31), between the supervision member (14) and each of the inverters (13), making it possible to transmit position information ($\theta_0$) to each of the inverters (13),
- a distribution device (18), which supplies to each electrical machine (11) an electrical supply signal (19) assembled from power electrical signals (17) generated by the inverters (13),

each of the inverters (13) comprising means for generating a power electrical signal (17) as a function of the inverter setpoint (*CONS_OND*) and of the position information ($\theta_0$) transmitted by the supervision member (14) respectively via the first and the second communication channels (15, 16; 31).

**2.** Modular power rack according to Claim 1, of which the first communication channel (15) consists of a bus link.

**3.** Modular power rack according to one of Claims 1 or 2, of which the second communication channel (16) consists of a set of bus links; a bus link linking each inverter to the supervision member.

**4.** Modular power rack according to one of Claims 1 or 2, of which the first and the second communication channels (31) consist of a single bus link linking the supervision member and the inverters, and transmitting both the inverter setpoints (*CONS_OND*) and the position information ($\theta_0$).

**5.** Modular power rack according to one of the preceding claims, comprising synchronization means which associates a date stamp *(to)* with each position information item ($\theta_0$) delivered by the position sensors (12) of each of the electrical machines (11); the date stamp *(to)* associated with position information ($\theta_0$) being also transmitted via the second communication channel (16; 31).

6. Modular power rack according to Claim 5, of which at least one inverter (14) comprises means for computing, from the position information ($\theta_0$) transmitted to the inverter (14) according to a transfer frequency, an estimated position ($\theta_{est}$) at a higher frequency than the transfer frequency; the estimated position ($\theta_{est}$) replacing the position information ($\theta_0$) to generate the power electrical signal (17).

7. Modular power rack according to Claim 6, of which the estimated position ($\theta_{est}$) is computed by means of a first order estimator implementing a relationship of the type:

$$\theta_{est} = \theta_0 + \omega_0 \times \Delta t$$

in which $\theta_{est}$, $\theta_0$, $\omega_0$ and $\Delta t$ respectively represent the estimated position, the position information transmitted to the inverter, a rotation speed of the rotor estimated by the inverter, and an estimation of time elapsed since the date stamp.

8. Modular power rack according to Claim 6, of which the estimated position ($\theta_{est}$) is computed by means of a second order estimator implementing a relationship of the type:

$$\theta_{est} = \theta_0 + \omega_0 \times \Delta t + \gamma_0 \times \Delta t^2$$

in which $\theta_{est}$, $\theta_0$, $\omega_0$, $\gamma_0$ and $\Delta t$ respectively represent the estimated position, the position information transmitted to the inverter, a rotation speed of the rotor estimated by the inverter, an acceleration of rotation of the rotor estimated by the inverter, and an estimation of time elapsed since the date stamp.

9. Modular power rack according to one of Claims 5 to 8, of which the date stamp ($t_0$) associated with a position information item ($\theta_0$) is determined by means of an additional physical signal.

10. Modular power rack according to one of Claims 5 to 8 and one of Claims 3 or 4, of which the date stamp (to) associated with a position information item ($\theta_0$) is a synchronization bit in a communication frame of the bus link (16; 31) transmitting the position information.

11. Control method intended for an aircraft comprising a set of electrical machines (11) each equipped with a position sensor (12), and a number of inverters (13) supplied with electrical power by an onboard network of the aircraft, a supervision member (14), a first communication channel (15; 31) between the supervision member (14) and each of the inverters (13), a second communication channel (16; 31) between the supervision member (14) and each of the inverters (13), a distribution device, **characterized in that** it comprises the steps consisting in:

- collecting, for each electrical machine (11), by means of the supervision member (14) a machine control setpoint (*CONS_MAC*) and position information ($\theta_0$) delivered by the position sensor (12) of the electrical machine (11),
- determining, for each inverter (13), by means of the supervision member (14) an inverter setpoint (*CONS_OND*) from the machine control setpoints (*CONS_MAC*) of the set of electrical machines (11),
- generating, by each inverter (13), an electrical power signal (17) as a function of the inverter setpoint (*CONS_OND*) and of the position information ($\theta_0$), transmitted by the supervision member (14) respectively via the first and the second communication channels (15, 16; 31),
- supplying to each electrical machine (11), by means of the distribution device (18), a supply electrical signal (19) assembled from power electrical signals (17) generated by one or more inverters (13).

12. Control method according to Claim 11, comprising the additional step consisting in determining, from the position information ($\theta_0$) transmitted to an inverter (13) according to a transfer frequency, an estimated position ($\theta_{est}$) at a higher frequency than the transfer frequency; the estimated position ($\theta_{est}$) replacing the position information ($\theta_0$) to generate the power electrical signal (17).

**FIG.1**

FIG.2

FIG.3

EP 2 757 681 B1